# EUROPEAN PATENT SPECIFICATION

(11) **EP 1 658 101 B1**
(45) Date of publication and mention of the grant of the patent: **20.12.2017**
(21) Application number: 04778137.2
(22) Date of filing: 14.07.2004
(51) Int. Cl.: A61L 2/04

(54) **APPARATUS AND METHODS FOR VARIABLY STERILIZING AQUEOUS LIQUIDS**
GERÄT UND VERFAHREN ZUR VARIABLEN STERILISATION VON WÄSSRIGEN FLÜSSIGKEITEN
APPAREIL ET PROCEDES DE STERILISATION DE MANIERE VARIABLE DE LIQUIDES AQUEUX

(30) Priority: 24.07.2003 US 626373
(43) Date of publication of application: 24.05.2006
(73) Proprietor: Bowen, John G., Prescott AR 86303 (US)
(72) Inventor: Bowen, John G., Prescott AR 86303 (US)
(74) Representative: Verdijck, Gerardus
(86) International application number: PCT/US2004/022467
(87) International publication number: WO 2005/009490

(56) References cited:
- WO-A1-03/082354
- GB-A- 678 743
- US-A- 4 070 289
- US-A- 5 403 564
- US-A- 6 136 362
- US-A1- 2001 050 215
- US-B1- 6 579 494

## Description

### FIELD OF INVENTION

This invention relates to apparatus and methods by which aqueous (water based) liquids are decontaminated for culinary and other uses, such as for medical purposes. This invention is further related to methods which may decontaminate such aqueous liquids without use of chemical or light energy processes.

### BACKGROUND OF INVENTION

There is an ever increasing need for new, more effective, efficient and lower cost methods for decontaminating water and other water based (aqueous) liquids. A profound example of changes in methods of water purification is a new water treatment plant located in Salt Lake City, Utah. Rather than chlorine, this plant employs ozone and ultraviolet light, as ultraviolet light is more effective than chlorine in terms of decontaminating water containing cryptosporidium and other chlorine resistant microbes. However, use of light is known to sometimes be ineffective and at other times be unpredictable when used in water that has variable light transmission quality.

While decontamination and purification are terms generally considered in an ultimate context of complete elimination of any and all undesirable contaminants, it is generally known, as disclosed on page 68 of Principles and Methods of Sterilization, 2nd Edition, published by Charles C. Thomas, Springfield, IL, in 1983, that complete sterilization should never be considered as completely attained. Rather, biological contaminants should be considered to be eliminated logarithmically, such as being measured by time constants dependent upon intensity and method of treatment. As an example, if a process kills a particular organism at a rate of 90% per minute, 10% of the organism survives at the end of the first minute of treatment. One percent survives the second minute of treatment and to achieve a kill of 99.9999% requires a treatment period of six minutes.

To codify a standard for sterilization, the Association for the Advancement of Medical Instrumentation (AAMI), 110 N. Glebe Road, Suite 220, Arlington, VA 22201-4795 has issued a proposed standard for selecting appropriate Sterility Assurance Levels (SALs)(See Proposed Standard on Selecting Appropriate Sterility Assurance Levels published as an Internet bulletin on February 10, 2000). While, SALs are generally used to determine levels of sterilisation for medical products, a similar standard may be considered for water and other aqueous liquid purification, as well. AAMI reports, as examples, that items which come into contact with skin may need only an SAL of 10⁻³ while implants or sterile liquid pathway products should be sterilised to an SAL of 10⁻⁶.

Similar considerations might be applied to water purification. Drinking water from one source might be sufficiently pure at an SAL of 10⁻³ while another source might require an SAL of 10⁻⁴ or better. It may also be desired to have a single water purification or sterilisation system which could be used for various purposes (e.g. for drinking water or for a medical application). Also, such aqueous liquids as milk might require different sterilisation for different packaging and storage requirements. This invention is meant to fulfill a variety of applications related to meeting requirements for a variety of sterilisation levels.

The patent literature includes a variety of disclosures of apparatus for sterilising and dispensing water, for example for medical uses. These include GB-A-678743, US-A-4070289, US-A-2001/0050215, US-B-6579494 and WO 03/082354.

WO 03/082354 discloses apparatus for sterilising a pumpable medium with a heating source through which medium is pumped and a heat exchanger between the inflow and outflow conduits to preheat medium upstream of the heating chamber from the medium flow downstream thereof.

US-A-4070289 discloses a batch system for producing pyrogen-free water by heating the water in a pressure vessel at a pressure and temperature and for a time sufficient to render the water pyrogen-free. It discloses a two-vessel arrangement where the input of non-pyrogen-free water into one vessel is preheated by passing through a coil in the other vessel.

I have now found that apparatus for sterilising aqueous liquids can be provided by using a specific combination of components constructed to form a flowthrough device adapted to receive influent contaminated liquid or impure liquid of questionable pollution and to provide a sterilised effluent product which may be variably contaminated to meet a variety of applications. Further, sterilisation levels (i.e. SALs) may be facilely accurately predictably invariably controlled, depending upon known or assumed characteristics and influent liquid to be sterilised and the projected use of that liquid.

In accordance with the invention, flow through aqueous liquid purification apparatus for sterilising water is characterised by the combination of features set out in the main claim. Further developments of the invention are set out in the sub-claims.

As will be seen in more detail below, apparatus in accordance with the invention comprises a liquid source, a flow and pressure controller which provides a variable control setting for both flow and pressure of influent liquid. From the source, liquid is distributed via closed reservoir (e.g. coils) within a heating chamber. The reservoir has a capacity which holds a liquid volume at least equal to a given maximum desired flow rate for a time necessary for sterilising the liquid to a predetermined SAL value.

Strategically disposed in thermal communication with the reservoir is a temperature sensor which is used to assure that liquid flowing through the heating chamber is at least at a temperature which is consistent with a desired sterilisation temperature. Of course, the controlled flow rate determines dwell time in the heating
chamber and, therefore, an ultimate SAL value of effluent liquid streaming from the heating chamber.

Heating should be accurately controlled and may be performed by such heat sources as electric elements, gas burners, solar and/or geothermal energy. To assure that heating is sufficiently accurately controlled, it is preferred that the heating chamber provide an accurately controlled temperature "bath" through which the liquid flows.

Presently, an oven filled with a paraffin having a predetermined melting temperature is employed to maintain a precise oven temperature.

Actual sterilization efficiency is dependent upon maintaining a liquid temperature above 100° Centigrade (e. g. 150° Centigrade) at a pressure (e.g. 344738 Pa (50 psi)), which assures achieving a desired SAL as liquid flows through the reservoir. Depending upon a preprogrammed dwell time in the reservoir, sterilization temperature may be variably determined to achieve a desired SAL. Alternately, and preferably, flow rate may be varied to achieve a target SAL.

Other than flow control at the source or influent site of the reservoir, two other flow control elements are employed. Downstream, near the effluent site of the reservoir, a pressure relief valve is disposed in the effluent flow path to guarantee that a predetermined minimum upstream pressure is maintained within the reservoir. Another, second, valve is also serially disposed in the flow path, preferably distal from the oven and the pressure release valve.

The second valve is selectively gated by an "AND" combination of water temperature and pressure sensors. The temperature and pressure sensors are each disposed at individual predetermined strategic sites within the water flow path. In one embodiment, temperature is sensed by a bi-metallic sensor switch disposed within the reservoir, sufficiently close to the influent site of the reservoir to assure that a predetermined minimum sterilization temperature has been achieved, thereby assuring maintenance of the minimum sterilization temperature within the remainder of the reservoir. In this embodiment, a pressure sensor, having a pressure-sensitive switch, is disposed downstream from the reservoir. The pressure sensor is selectively closed when a predetermined sterilization upstream pressure is detected. The contacts of the temperature sensor and pressure sensor are connected in series such that when contacts of each switch close the second valve is opened (i. e. before the second valve opens, the
temperature sensor must sense at least a predetermined temperature and the pressure sensor, likewise, must have detected a predetermined pressure.) Also, each switch of each sensor are opened and closed at different values (of temperature and pressure), thereby creating a hysteresis in each switching parameter and, as a result, assuring stable operation. For example, the temperature sensor may operate to close the temperature switch at a temperature of substantially 150° C and operate to open the switch at 140° C. In tandem with the temperature sensor, the pressure sensor may operate to close the pressure switch at 551580.8 Pa (80 psi) and open the pressure switch at 344738 Pa (50 psi).

Only when both switches are closed is the second valve opened.

To preserve as much energy as possible, it is preferred to steer oven effluent through a heat exchanger which transfers heat from the effluent to the oven influent such that temperature, and therefore thermal energy, of liquid flowing from the second valve is substantially reduced. In this manner, by controlling dwell time in the reservoir (in the oven) by controlling liquid flow within predetermined limits, liquid of a desired SAL is provided as a cooled continuous flow effluent product.

Accordingly, it is a primary object to provide an efficacious aqueous liquid purification system which controllably sterilizes aqueous liquid to a predetermined SAL.

It is a fundamental object to provide an aqueous liquid purification system which controllably sterilizes an aqueous liquid to a predetermined level by controlling one or more of :
(a) rate of flow of the aqueous liquid through said system;
(b) temperature at which the aqueous liquid is sterilized; and/or
(c) pressure at which the liquid is maintained throughout sterilization.

It is an important object to provide a system which inherently maintains a predetermined pressure in a heating unit thereby assuring that aqueous liquid in the heating unit is maintained in a substantially liquid state while being sterilized therein.

It is an object to provide a process by which a heating unit, through which aqueous liquid flows and in which the aqueous liquid is heated, is maintained at a precise temperature.

It is an object to provide a system which assures a predetermined pressure of effluent flowing from said system.

It is an object to provide an energy efficient system which transfers energy from effluent liquid, after sterilization, to influent liquid before sterilization, thereby reducing effluent temperature to a predetermined safer lower temperature level before leaving the system and preheats influent aqueous liquid before it enters the heating unit.

These and other objects and features of the present invention will be apparent from the detailed description taken with reference to accompanying drawings.

### BRIEF DESCRIPTION OF THE DRAWINGS

Figure 1 is schematic of an aqueous liquid sterilization system which may be adjusted to control degree of purification (SAL).
Figure 2 is a schematic of a test system model used to determine effectiveness of a sterilization process consistent with the instant invention.

### DETAILED DESCRIPTION OF THE ILLUSTRATED EMBODIMENTS

In this description, the term proximal is used to indicate nearness of a referenced item to the object of the sentence describing its position. The term distal should be interpreted as indicating "away from" a referenced item. Numbers and primes of the same numbers are used to indicate items of related mechanics and function, but which may have physical differences.

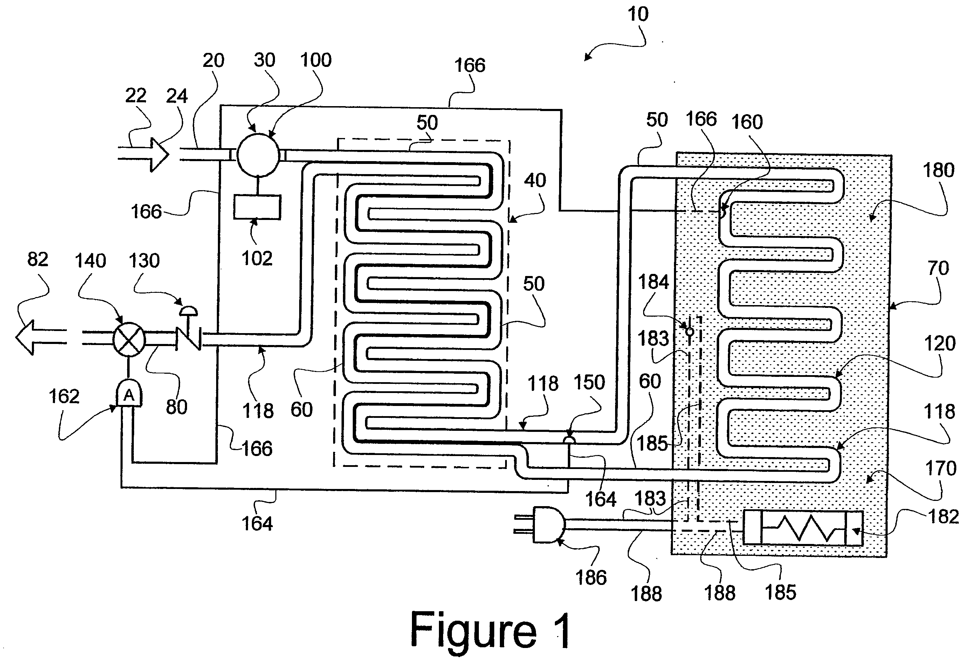

Reference is now made to the embodiment illustrated in Figure 1. While only a single embodiment is provided herein, it should be apparent to one skilled in water and other aqueous liquid purification by sterilization that other embodiments may be employed within the scope of the invention.

As seen in Figure 1, a water sterilization system 10 comprises an influent channel 20, wherethrough water from a source 22 (see arrow 24) is delivered, a pump subsystem 30, a heat exchanger 40 through which influent liquid flows in an input pathway 50 and through which effluent liquid flows in an output pathway 60, a pressurized heating chamber 70 and a discharge pathway 80 (see arrow 82).

Pump subsystem 30 comprises a pump 100 and a pump controller 102. Pump 100 should have a variable pumping capacity to supply a predetermined volume of liquid flow through the system against a back pressure which is the consequence rising of a temperature rise in heating chamber 70 and back-pressure of release valve 130. It should be noted that no pump may be required if pressure of the source exceeds the back pressure. However, in both cases, it is necessary to control flow to assure liquid is retained in heating chamber 70 for a period sufficiently long to achieve a desired SAL.

In cases where flow is not pump controlled and upstream pressure is known, a flow- restricting orifice may be employed. In those instances where controlled flow rates are used to variably determine SALs of effluent, an adjustable orifice may be employed.

Heat exchanger technology is well known in water heating and cooling art.

However, it is important that as much energy as possible be transferred from liquid in output or effluent pathway 60 to input or influent pathway 50 within heat exchanger 40 to minimize heat energy loss. For these reasons, pathway 50 should be proximal to and in good thermal communication with pathway 60.

It is critical that the system liquid pathway 118 (a combination of input pathway 50, an internal heating chamber pathway 120 and output pathway 60) be capable of withstanding an internal pressure generated by heating of liquid within the pathway to a desired temperature while maintaining the liquid state. As an example, liquid at 150° C has a vapor pressure of 379211.8 Pa (55 psi). To assure liquid at 150° C does not change state, internal pressure in pathway 118 must exceed 379211.8 Pa (55 psi).

For this reason, a flow-resisting element, such as a pop valve 130 is serially connected in a section of output pathway 60 distal from heating chamber 70 and heat exchanger 40. To further assure that there is no flow through pathway 118 (and discharge pathway 80) until conditions for water sterilization have been reached in heating chamber 70, a second valve, numbered 140, is serially connected in discharge pathway 80. In this embodiment, valve 140 is a solenoid valve activated by an AND combination of two switches, a pressure sensor switch 150, and a temperature sensor switch 160.

Each sensor switch (150 and 160) activates to open at a first predetermined level and closes at a second predetermined level. For example, pressure sensor switch 150 may be selected to close at 551580.8 Pa (80 psi) and open at 379211.8 Pa (55 psi), while temperature sensor switch 160 may close at 150° C and open at 140° C. As such, switch 150 must sense 551580.8 Pa (80 psi) and switch 160 must sense 150° C (symbolized by AND gate 162) to open valve 80 to permit
effluent to flow through system 10. Note, pressure sensor switch 150 is connected to AND gate 162 via line 164 and temperature sensor switch 160 is connected to AND gate 162 via line 166.

To sterilize water at least to a predictable SAL, both system 10 water flow rate and heating chamber 70 temperature must be known and well controlled to assure liquid in pathway 120 is resident in heating chamber 70 for a long enough period to assure the desired sterilization level. Water flow rate may be closely controlled by pump 100 and pump controller 102. Temperature is preferably induced in liquid in pathway 120 by a high heat capacity bath 170, which has high heat transfer and precise temperature control characteristics.

While other media may be used in such a bath, such as oil or high heat capacity fluids, it is preferred to use a precisely specified paraffin, such as matter 180. In this case, matter 180 is a stable substance which changes state from a solid to a liquid and maintains a constant desired predetermined temperature during the state change. Particularly suited for use in bath 170 is paraffm. Paraffin may be formulated to accurately and precisely melt at a selected temperature between 100°C and 170°C. Such paraffin is currently available from ASTOR Specialty Chemicals, 1600 Commerce, Marshall, TX 75670. As an example, matter 180 may be selected to have a melting point of 150°C.

Heating of matter 180 is accomplished by a set of electrical heating elements, generally referenced by 182, which are turned off and on by a bimetallic temperature switch 184. Heating elements 182 are powered by a standard electrical plug assembly 186, which is interconnected to heating elements 182 via electrical lines 183, 185 and 188. Bimetallic temperature switch 184 is interposed between line 183 and line 185. Dashed lines indicate electrical line residence in bath 170.

Switch 184 is selected to open at a temperature which is fractionally above the melting point of matter 180 (e.g. 152°C and to close at a temperature at or just below the melting point of matter 180 (i.e. 150°C). So constrained, heating of matter 180 is the result of a hysteresis effect, making operation stable.

System 10 may be constructed from a large number of parts generally available in commerce today. Examples of parts which may be used are as follows:

| System 10 Part | Commercial Part |
|---|---|
| Pump 100 | Flojet Pump model #03655E7011A, available from Flojet, ITT Industries, 201 CON, Fort Hill Ranch, CA. |
| Temp. Sensor Switch 184 | Texas Instruments 20260 bimetal thermal switch, Normally Closed. |
| Temp. Sensor Switch 160 | Texas Instruments 20260 bimeatl thermal switch, Normally Open. |
| Pres. Sensor Switch 150 | Texas Instruments 36PS-344738 Pa (50 psi), Normally Open. |
| Heating Elements 182 | TEMCO Finned Strip Heaters, Type 4,500 Watt, available from TEMCO, 607 North Central, Wood Dale, IL 60191. |
| Valve 140 | Solenoid Valve #4639K8 (120 volt,. 13 Amps), available from McMaster-Carr Supply Co. , www. mcmaster. com. |
| Press. Rel. Valve 130 | CA Series In-line Adjustable Relief Valve having a cracking pressure range from 50 to 150 PSIG, available from NUPRO Company, 4800 East 345^{th} Street, Willoughby, OH 44094. |
| Pathway 118 | Preferably constructed from high pressure, stainless steel tubing (with all joints welded to withstand temperatures above melting temperature of matter 180). |

The time to sterilize an item, using saturated steam at a given temperature is well known and summarized in Table 1 below:

**Table 1**

| Time to sterilize | Sterilization temperature |
|---|---|
| 20 minutes | 121°C |
| 10 minutes | 128°C |
| 3.5 minutes | 134°C |
| Nearly instantaneous | 141° C |

However, data in Table 1 is not directly related to SALs. Therefore, some nominal experimentation may be necessary to develop known sterilization criteria for each system 10. Through experimentation it has been found that water sterilization by system 10 at different parametric levels of flow and temperature yields different SALs for assorted species tested. It should not be surprising that SALs vary for different microbes and other water-borne organisms.

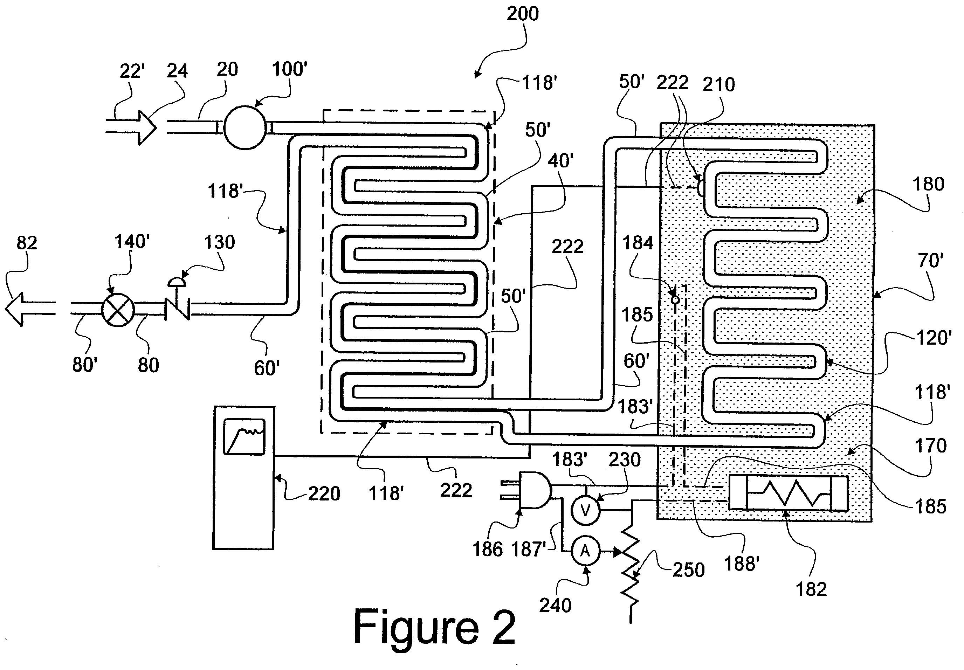

Figure 2 is a schematic representation of a test model 200 used to test effectiveness of sterilizing aqueous solutions by processes consistent with the instant invention. As seen in Figure 2, model 200 comprises a source 22' of influent contaminated water. In this case, source 22' is a 227.1246 dm³ (60 gallon) drum strategically disposed above a pump 100' for easy priming.

Similar to system 10 seen in Figure 1, model 200 comprises an influent channel 20, wherethrough water from a source 22' (see arrow 24) is delivered, a pump 100', a heat exchanger 40' through which influent liquid flows in an input pathway 50' and through which effluent liquid flows in an output pathway 60', a pressurized heating chamber 70', and a discharge pathway 80' (see arrow 82).

Pump 100' is manually controllable. Pump 100' has a variable pumping capacity which is manually adjusted to supply a predetermined volume of liquid flow through the system. A needle valve 140' is used for manual control of flow through model 200.

Temperature of solution in pathway 120' (which is the in heating bath portion of total system pathway 118') is monitored by means of a temperature sensor 210 (a thermocouple) and a graphic recorder 220. Note that an electrical line 222 interconnects sensor 210 and recorder 220. In this model, an Esterline Angus Video Graphic Model B recorder was used.

Energy supplied to heating elements 182 of oven 70' of model 200 was monitored by a voltmeter 230 and an ammeter 240. Varying amounts of energy was supplied from electrical plug assembly 186 to heating elements 182 and therefrom to bath 170 of oven 70' via a variable voltage rheostat 250. Note that electrical lines 183', 185, 187' and 188' are used to supply electrical energy to heating elements 182. Line 183' interconnects assembly 186 and one side of temperature sensor switch 184. The other side of temperature sensor switch 184 is connected to heaters 182 via electrical line 185. Ammeter 240 is placed in series (via electrical line 187') from plug assembly 186 to rheostat 250. Rheostat 250 is connected to heating elements 182 via electrical line 188'.

Model 200 system liquid pathway 118' was designed to be capable of withstanding any internal pressure generated by heating of liquid within the pathway to
temperatures within the scope of reasonable experimental safety limits while constraining liquids in pathway 118' to remain in a liquid state.

In model 200, liquid pathway 118' had a volume of 600 ml. Temperature was held between 143° C and 144°C. Pump 100' supplied liquid at a constant pressure of 655002.2 Pa (95 psi). Heat exchanger 40' employed coaxial piping. Pop valve 130 (a pressure release valve) was rated at 344738 Pa (50 psi). As earlier disclosed, needle valve 140' was used to manually regulate flow rate through pathway 118'.

The temperature of pathway 118' was manually monitored by thermocouple 210 placed in thermal communication with pathway 118'. As earlier disclosed, an Estiline Angus model videographic system B (recorder 220) was used to continuously monitor temperature. Variations in temperature caused by increasing or decreasing rate of flow were adjusted by rheostat 250 which adjusted electric power supplied to a set of heating elements, generally referenced as 182. In model 200, four such 500 watt heating elements were employed.

Biologic testing was performed to determine effectiveness of sterilization at different flow rates using water contaminated with the following four different microorganisms:
1. Bacillia sterothermopbilus
2. E. colli
3. Candida Aldicans
4. Pseudomonas aeruginosa

A predetermined quantity of each microorganism was mixed with 94.63525 dm³ (25 gallons) of distilled water and dispensed into a drum to provide source 22'. A serial dilution of each batch of microorganisms was titrated and tested to establish the concentration of each organism in the batch. Every batch prepared was determined to contain at least 10⁶ organisms.

Each of the four test organisms were run in duplicate on different days. A test protocol was prepared to run five different effective sterilization periods on each organism. Generally, flow rates employed were divided into a plurality of constant flow one and one-half hour periods. In the runs, flow rates used ranged from 50 to 350
milliliters per minute, in 50 milliliter per minute increments. However, due to lack of meaningful results at lower flow rates and limits on volumes of solution available in model 200, less than a complete complement of flow rates were often used, e.g. 250, 300 and 350 milliliters/minute were used in a test run performed on April 25, 2003, the results of which are provided hereafter.

Samples were taken at fifteen-minute intervals throughout each test period (providing seven samples per period). Each sample was tested by placing a milliliter aliquot onto a blood agar or enriched agar plate, incubated for 48 hours and read by a qualified microbiologist. As seen by the examples of data provided hereafter, the kill ratio of each sample generally exceeded a 10⁻⁶ organism reduction in processed effluent.

Though all tests showed similar sterilization results, a summary of two tests using bacillia sterothermopbilus are provided, in Tables 3 and 5 below, as exemplary results of running model 200. The dates of performance of the exemplary tests were April 19, 2003 and April 25, 2003 respectively. For each test run, content of source 22' was titrated as a control. Two sets of such results, one set for each solution tested on April 19, 2003 and April 25, 2003, are provided separately in Tables 2 and 4, respectively.

### Titration of Stock Culture Used 4/19/03

The sample volume is 1.0 ml/each dilution (unless otherwise noted). The plates incubated at 59°C for 18 hours.

**Table 2**

| Event | Dilution | Colonies |
|---|---|---|
| 1 | 10⁻¹ | TNTC ** |
| 2 | 10⁻² | TNTC ** |
| 3 | 10⁻³ | TNTC ** |
| 4 | 10⁻⁴ | TNTC ** |
| 5 | 10⁻⁵ | no record |
| 6 | 10⁻⁶ | no record |
| 7 | 10⁻⁷ | ∼600 |
| 8 | 10⁻⁸ | *** |
| 9 | 10⁻⁹ | *** |
| 10 | 10⁻¹⁰ | *** |
| 11 | 10⁻⁰ * (Stock) | TNTC ** |

| | | |
|---|---|---|
| * 0.250 ml sample volume ** Too numerous to count *** Titration not performed due to measurable level at event 7 | | |

### Test Run 4/19/03 (Temperature of pathway 118': 143°C to 144°C)

**Table 3**

| Run # | Flow Rate (ml/min) | Time in minutes (within run) | Colonies |
|---|---|---|---|
| I | 100 | 0 | 2 ** |
| | | 15 | 0 |
| | | 30 | 0 |
| | | 45 | 0 |
| | | 60 | 0 |
| | | 75 | 0 |
| | | 90 | 0 |
| II | 150 | 0 | 0 |
| | | 15 | 0 |
| | | 30 | 0 |
| | | 45 | 0 |
| | | 60 | 0 |
| | | 75 | 0 |
| | | 90 | 0 |
| III | 200 | 0 | 0 |
| | | 15 | 0 |
| | | 30 | 0 |
| | | 45 | 0 |
| | | 60 | 0 |
| | | 75 | 0 |
| | | 90 | 0 |
| IV | 300 | 0 | 0 |
| | | 15 | 0 |
| | | 30 * | 450 |
| | | 45 * | 150 |

| | | | |
|---|---|---|---|
| * See note (reference [*]) following Table 5. ** Initial contamination in effluent pathway. | | | |

### Titration of Stock Culture Used 4/25/03

Sample volume is 1.0 ml/each dilution (unless otherwise noted). The plates incubated at 59°C for 18 hour.

**Table 4**

| Event | Dilution | Colonies |
|---|---|---|
| 1 | 10⁻¹ | TNTC ** |
| 2 | 10⁻² | TNTC ** |
| 3 | 10⁻³ | 1000 |
| 4 | 10⁻⁴ | 400 |
| 5 | 10⁻⁵ | 250 |
| 6 | 10⁻⁶ | 180 |
| 7 | 10⁻⁷ | 120 |
| 8 | 10⁻⁸ | 75 |
| 9 | 10⁻⁹ | 64 |
| 10 | 10⁻¹⁰ | 25 |
| 11 | 10⁻⁰ * (Stock) | TNTC ** |

| | | |
|---|---|---|
| * 0.250 ml sample volume ** Too Numerous To Count | | |

### Test Run 4/25/03 (Temp. of pathway 118': 143 to 144 °C)

**Table 5**

| Run # | Flow Rate (ml/min) | Time in minutes (within run) | Colonies |
|---|---|---|---|
| I | 250 | 0 | 0 |
| | | 15 | 0 |
| | | 30 | 0 |
| | | 45 | 0 |
| | | 60 | 0 |
| | | 75 | 0 |
| | | 90 | 0 |
| II | 300 | 0 | 0 |
| | | 15 | 0 |
| | | 30 | 0 |
| | | 45 | 0 |
| | | 60 | 0 |
| | | 75 | 0 |
| | | 90 | 0 |
| III | 350 | 0 | 0 |
| | | 15 | 0 |
| | | 30 | 0 |
| | | 45 | 0 |
| | | 60 | 0 |
| | | 75 * | 1000 |

| | | | |
|---|---|---|---|
| * The tank take-off connection was located at a point 2.5 gallons from tank bottom. Test samples were taken until the flow became erratic due to the tank drainage. This variation in liquid flow caused the oven temperature to first increase rapidly, thus turning off bimetal over temperature protectors (not otherwise disclosed) and resulting in a dramatic decrease in operating temperature. Data at run #III, time 75 minutes (and at run #II, times 30 and 45 minutes) was provided to permit a comparative assessment with data derived from system 200 under normal operating conditions. | | | |

The results from all tests proved the efficacy of the instant invention.

Independent of microorganisms tested and flow rates tested, system model 200 clearly sterilized contaminated influent to produce a continuously flowing sterilized effluent.

The effectiveness of sterilization was demonstrated when compared with final samples of contaminated and unsterilized effluent which resulted when temperature of model 200 precipitously declined as an end-of-run phenomenon when water from source 22' was depleted.

The present invention is by no means limited to the above described, preferred embodiments thereof. The rights sought are defined by the following claims, within the scope of which many modifications are possible.

## Claims

1. Flow through aqueous liquid purification apparatus (10) for sterilizing liquid to a target Sterility Assurance Level (SAL) comprising:
- a heating chamber (70), through which the liquid flows while being heated, said heating chamber including a medium by which heat is thermally communicated to the liquid, an enclosed pathway (120) for the liquid, said pathway being in thermal communication with the medium, a heat source capable of heating an continuously maintaining liquid in the chamber pathway at a predetermined sterilizing temperature for a predetermined period of time;
- wherein the system liquid pathway (118) is a combination of an input pathway (50), an internal heating chamber pathway (120) and an output pathway (60), and including sidewalls capable of withstanding increased internal pressure of aqueous liquid heated to the sterilizing temperature;
- a source (22) which inputs an aqueous liquid to be purified at a predetermined flow rate to the pressurized heating chamber of said apparatus;
- a pressure regulator (130) downstream from the exit including a controller which assures upstream pressure within the pathway is at least a predetermined pressure consistent with the sterilizing temperature and flow rate to assure adequate sterilization of effluent aqueous liquid while retaining the liquid in the liquid state,
**characterized in that**:
- the enclosed pathway (120) within the heating chamber has a capacity which holds a liquid volume at least equal to a given maximum desired flow rate for a time necessary for sterilizing the liquid to a predetermined SAL value;
- downstream, near the effluent site of the enclosed pathway within the heating chamber, a pressure relief valve (130) is disposed in the effluent flow path to guarantee that a predetermined minimum upstream pressure is maintained within the enclosed pathway within the heating chamber, and another, second, valve (140) is also serially disposed in the flow path downstream of the pressure relief valve;
- the second valve (140) selectively gated by an "AND" combination of liquid temperature and pressure sensors (150,160), with the temperature sensor switch (150) disposed within the fluid flow path within the enclosed pathway sufficiently close to the influent site of the enclosed pathway to assure that a predetermined minimum sterilization temperature has been achieved, thereby assuring maintenance of the minimum sterilization temperature within the remainder of the pathway, and with the pressure sensor switch (160) disposed downstream from the enclosed pathway to detect a predetermined sterilization upstream pressure, wherein contacts of each of the switches of the temperature sensor and pressure sensor are connected in series such that the second valve is opened when temperature sensor senses at least a predetermined temperature and the pressure sensor detects a predetermined pressure, and wherein the temperature sensor (150) including a temperature sensing switch disposed to sense the temperature of liquid in the heating chamber and to close at a first predetermined temperature and to open at a second predetermined temperature, and
the pressure sensor (160) including a pressure sensing switch disposed to sense the pressure of liquid in the heating chamber and to close at a first predetermined pressure and to open at a second predetermined pressure; wherein each switch of each sensor are opened and closed at different values (of temperature and pressure), thereby creating a hysteresis in each switching parameter and, as a result, assuring stable operation, wherein the second valve operatively opening when said pressure sensing switch and said temperature sensing switch are both closed; and
- a heat exchanger (40) through which influent liquid flows in the output pathway (50) and through which effluent liquid flows in the output pathway (60).

2. Flow through aqueous liquid purification apparatus according to Claim 1, further including a heating system for heating the liquid flowing through the apparatus to a precise temperature while resident in the heating chamber.

3. Flow through aqueous liquid purification apparatus according to Claim 2, further including a heating bath comprising a material which changes state at the predetermined temperature.

4. Flow through aqueous liquid purification apparatus according to Claim 1, wherein said source comprises a liquid pump assembly.

5. Flow through aqueous liquid purification apparatus according to Claim 4, wherein said liquid pump assembly includes a variably controllable pump.

6. Flow through aqueous liquid purification apparatus according to Claim 1, wherein said source is a static reservoir and an associated flow control orifice.

7. Flow through aqueous liquid purification apparatus according to Claim 1, wherein said chamber comprises an electrical heat source.

8. Flow through aqueous liquid purification apparatus according to one or more of the foregoing Claims, further comprising a heat exchanger.

9. A method for sterilizing aqueous liquid to a predetermined Sterility Assurance Level (SAL) including the steps of:
- providing a source of influent contaminated aqueous liquid to be purified to the predetermined SAL;
- providing a heating chamber (70), through which the aqueous liquid is steered and heated to a first predetermined temperature;
- providing a pathway (118) comprising an input pathway (50), an internal heating chamber pathway (120) and an output pathway (60) which traverses the heating chamber from the influent source to a effluent site from which aqueous liquid of the predetermined SAL flows;
- providing a first valve (130) in the pathway down stream from said heating chamber, said valve restricting effluent flow until a first predetermined pressure is reached in the pathway;
- providing a second valve (140) in the pathway down stream from said first valve, said second valve being closed to restricted effluent flow until a second predetermined temperature, which is selected as an adequate sterilization temperature for the SAL at preselected flow rates from the source, is reached by the aqueous liquid at a predetermined site in the heating chamber and until a second predetermined pressure is measured which assures that the aqueous liquid remains in the liquid state in the pathway;
- initiating operation by closing the valve;
- initiating heating of the heating chamber to the first predetermined temperature;
- initiating flow of the aqueous liquid from the source;
- opening the first valve when the first predetermined pressure is reached;
- opening the second valve when both the second predetermined temperature and second predetermined pressure are jointly reached thereby assuring effluent of having the predetermined SAL, wherein the temperature sensor (150) including a temperature sensing switch disposed to sense the temperature of liquid in the heating chamber and to close at a first predetermined temperature and to open at a second predetermined temperature, and the pressure sensor (160) including a pressure sensing switch disposed to sense the pressure of liquid in the heating chamber and to close at a first predetermined pressure and to open at a second predetermined pressure; wherein each switch of each sensor are opened and closed at different values (of temperature and pressure), thereby creating a hysteresis in each switching parameter and, as a result, assuring stable operation; and
- providing a heat exchanger (40) through which influent liquid flows in the output pathway (50) and through which effluent liquid flows in the output pathway (60).

## Patentansprüche

1. Durchflussreinigungsgerät (10) für eine wässrige Flüssigkeit, um eine Flüssigkeit auf ein Soll-Sterility-Assurance-Level (SAL)zu sterilisieren, mit:
- einer Heizkammer (70), durch die die Flüssigkeit strömt, während sie erwärmt wird, wobei die Heizkammer ein Medium, durch das Wärme mit der Flüssigkeit thermisch in Verbindung gelangt, einen geschlossenen Pfad (120) für die Flüssigkeit, wobei der Pfad mit dem Medium in einer thermischen Verbindung ist, und eine Wärmequelle aufweist, die eine kontinuierlich in dem Kammerpfad gehaltene Flüssigkeit auf eine vorbestimmte Sterilisationstemperatur in einer vorbestimmten Zeitperiode erwärmen kann;
- wobei der Systemflüssigkeitspfad (118) eine Kombination eines Eingabepfads (50), eines inneren Erwärmungskammerpfads (120) und eines Abgabepfads (60) ist und Seitenwände aufweist, die einen erhöhten Innendruck einer wässrigen Flüssigkeit standhalten können, die auf die Sterilisationstemperatur erwärmt ist;
- einer Quelle (22), die eine zu reinigende, wässrige Flüssigkeit mit einer vorbestimmten Durchsatzrate in die mit Druck beaufschlagte Heizkammer des Geräts eingibt;
einem Druckregulator (130) stromabwärts von dem Ausgang, der eine Steuervorrichtung aufweist, die gewährleistet, dass ein stromaufwärtiger Druck innerhalb des Pfads zumindest ein vorbestimmter Druck ist, der mit der Sterilisationstemperatur und der Durchsatzrate konsistent ist, um eine angemessene Sterilisation der abfließenden, wässrigen Flüssigkeit zu gewährleisten, während die Flüssigkeit in dem flüssigen Zustand gehalten wird,
**dadurch gekennzeichnet, dass**:
- der geschlossene Pfad (120) innerhalb der Heizkammer eine Kapazität hat, die ein Flüssigkeitsvolumen hält, das zumindest gleich einer gegebenen, maximalen, gewünschten Durchsatzrate in einer Zeit ist, die zum Sterilisieren der Flüssigkeit auf einen vorbestimmten SAL-Wert erforderlich ist;
- ein Druckentlastungsventil (130) in dem Abflussströmungspfad stromabwärts nahe der Abflussseite des geschlossenen Pfads innerhalb der Heizkammer angeordnet ist, um zu garantieren, dass ein vorbestimmter, minimaler, stromaufwärtiger Druck innerhalb des geschlossenen Pfads innerhalb der Heizkammer aufrechterhalten wird, und außerdem ist ein anderes, zweites Ventil (140) in Reihe in dem Strömungspfad stromabwärts von dem Druckentlastungsventil angeordnet;
- das zweite Ventil (140) wahlweise durch eine "UND-Kombination" von Flüssigkeitstemperatur- und Drucksensoren (150, 160) angesteuert ist, wobei der Temperatursensorschalter (150) innerhalb des Fluidströmungspfads innerhalb des geschlossenen Pfads ausreichend nahe an der Einflussseite des geschlossenen Pfads angeordnet ist, um zu gewährleisten, dass eine vorbestimmte, minimale Sterilisationstemperatur erreicht wurde, wodurch das Aufrechterhalten der minimalen Sterilisationstemperatur innerhalb des restlichen Pfads gewährleistet wird, und wobei der Drucksensorschalter einen stromaufwärtigen Sterilisationsdruck schaltet, wobei Kontakte der jeweiligen Schalter des Temperatursensors und des Drucksensors in Reihe so verbunden sind, dass das zweite Ventil geöffnet wird, wenn der Temperatursensor zumindest eine vorbestimmte Temperatur erfasst und der Drucksensor einen vorbestimmten Druck erfasst, und wobei der Temperatursensor (150) einen Temperaturerfassungsschalter aufweist, der zum Erfassen der Temperatur der Flüssigkeit in der Heizkammer und zum Schließen bei einer ersten vorbestimmten Temperatur und zum Öffnen bei einer zweiten vorbestimmten Temperatur angeordnet ist, und
wobei der Drucksensor (160) einen Druckerfassungsschalter aufweist, der zum Erfassen des Drucks der Flüssigkeit in der Heizkammer und zum Schließen bei einem ersten vorbestimmten Druck und zum Öffnen bei einem zweiten vorbestimmten Druck angeordnet ist; wobei jeder Schalter des jeweiligen Sensors bei unterschiedlichen Werten (von Temperatur und Druck) geöffnet und geschlossen wird, wodurch eine Hysterese für den jeweiligen Schaltparameter erzeugt wird und infolgedessen ein stabiler Betrieb sichergestellt wird, wobei das zweite Ventil wirksam geöffnet wird, wenn der Druckerfassungsschalter und der Temperaturerfassungsschalter jeweils geschlossen sind; und
- einem Wärmetauscher (40), durch den einfließende Flüssigkeit in den Abgabepfad (50) strömt und durch den abfließende Flüssigkeit in den Abgabepfad (60) strömt.

2. Durchflussreinigungsgerät für eine wässrige Flüssigkeit gemäß Anspruch 1, des Weiteren mit einem Heizsystem zum Erwärmen der durch das Gerät strömenden Flüssigkeit auf eine präzise Temperatur, während diese in der Heizkammer verbleibt.

3. Durchflussreinigungsgerät für eine wässrige Flüssigkeit gemäß Anspruch 2, des Weiteren mit einem Heizbad, das ein Material aufweist, das einen Zustand bei der vorbestimmten Temperatur ändert.

4. Durchflussreinigungsgerät für eine wässrige Flüssigkeit gemäß Anspruch 1, wobei die Quelle eine Flüssigkeitspumpenbaugruppe aufweist.

5. Durchflussreinigungsgerät für eine wässrige Flüssigkeit gemäß Anspruch 4, wobei die Flüssigkeitspumpenbaugruppe eine variable, steuerbare Pumpe aufweist.

6. Durchflussreinigungsgerät für eine wässrige Flüssigkeit gemäß Anspruch 1, wobei die Quelle ein statisches Reservoir und eine dazugehörige Strömungssteuerungsöffnung ist.

7. Durchflussreinigungsgerät für eine wässrige Flüssigkeit gemäß Anspruch 1, wobei die Kammer eine elektrische Wärmequelle aufweist.

8. Durchflussreinigungsgerät für eine wässrige Flüssigkeit gemäß einem oder mehreren der vorherigen Ansprüche, des Weiteren mit einem Wärmetauscher.

9. Verfahren zum Sterilisieren einer wässrigen Flüssigkeit auf ein vorbestimmtes Sterility-Assurance-Level (SAL), mit den folgenden Schritten:
- Bereitstellen einer Quelle für eine einfließende, kontaminierte wässrige Flüssigkeit, die auf den vorbestimmten SAL zu reinigen ist;
- Bereitstellen einer Heizkammer (70), durch die die wässrige Flüssigkeit gelenkt und auf eine erste vorbestimmte Temperatur erwärmt wird;
- Bereitstellen eines Pfads (118), der einen Eingabepfad (50), einen inneren Heizkammerpfad (120) und einen Abgabepfad (60) aufweist, der die Heizkammer von der Einflussquelle zu einer Abflussseite durchquert, aus der eine wässrige Flüssigkeit mit dem vorbestimmten SAL strömt;
- Bereitstellen eines ersten Ventils (130) in dem Pfad stromabwärts von der Heizkammer, wobei das Ventil eine Abflussströmung begrenzt, bis ein erster vorbestimmter Druck in dem Pfad erreicht wird;
- Bereitstellen eines zweiten Ventils (140) in dem Pfad stromabwärts von dem ersten Ventil, wobei das zweite Ventil geschlossen wird, um eine abfließende Strömung zu begrenzen, bis eine zweite vorbestimmte Temperatur, die als eine angemessene Sterilisationstemperatur für den SAL bei vorausgewählten Durchsatzraten von der Quelle ausgewählt wird, von der wässrigen Flüssigkeit an einer vorbestimmten Stelle in der Heizkammer erreicht wird und bis ein zweiter vorbestimmter Druck gemessen wird, der sicherstellt, dass die wässrige Flüssigkeit in dem Pfad in dem flüssigen Zustand bleibt;
- Starten eines Betriebs durch Schließen des Ventils;
- Starten eines Erwärmens der Heizkammer auf die erste vorbestimmte Temperatur;
- Starten einer Strömung der wässrigen Flüssigkeit aus der Quelle;
- Öffnen des ersten Ventils, wenn der erste vorbestimmte Druck erreicht wird;
- Öffnen des zweiten Ventils, wenn sowohl die zweite vorbestimmte Temperatur als auch der zweite vorbestimmte Druck zusammen erreicht werden, wodurch ein Abfluss mit dem vorbestimmten SAL sichergestellt wird, wobei der Temperatursensor (150) einen Temperaturerfassungsschalter aufweist, der zum Erfassen der Temperatur der Flüssigkeit in der Heizkammer und zum Schließen bei einer ersten vorbestimmten Temperatur und zum Öffnen bei einer zweiten vorbestimmten Temperatur angeordnet ist, und wobei der Drucksensor (160) einen Druckerfassungsschalter aufweist, der zum Erfassen des Drucks der Flüssigkeit in der Heizkammer und zum Schließen bei einem ersten vorbestimmten Druck angeordnet ist, wobei der Sensor bei unterschiedlichen Werten (von Temperatur und Druck) geöffnet und geschlossen wird, wodurch eine Hysterese für den jeweiligen Schaltparameter erzeugt wird und infolgedessen ein stabiler Betrieb sichergestellt wird; und
- Bereitstellen eines Wärmetauschers (40), durch den einströmende Flüssigkeit in den Abgabepfad (50) strömt und durch den abfließende Flüssigkeit in den Abgabepfad (60) strömt.

## Revendications

1. Appareil de purification de liquide aqueux à écoulement continu (10) pour stériliser un liquide à un niveau d'assurance de stérilité (SAL) cible comprenant :
- une chambre de chauffage (70), à travers laquelle le liquide s'écoule tout en étant chauffé, ladite chambre de chauffage comprenant un milieu par lequel de la chaleur est communiquée thermiquement au liquide, un trajet enfermé (120) pour le liquide, ledit trajet étant en communication thermique avec le milieu, une source de chaleur capable de chauffer et de maintenir continûment le liquide dans le trajet de chambre à une température de stérilisation prédéterminée pendant une période prédéterminée ;
- dans lequel le trajet de liquide de système (118) est une combinaison d'un trajet d'entrée (50), d'un trajet de chambre de chauffage interne (120) et d'un trajet de sortie (60), et comprenant des parois latérales capables de résister à une pression interne accrue du liquide aqueux chauffé à la température de stérilisation ;
- une source (22) qui délivre un liquide aqueux à purifier à un débit prédéterminé dans la chambre de chauffage sous pression dudit appareil ;
- un régulateur de pression (130) en aval de la sortie comprenant un contrôleur qui garantit qu'une pression en amont dans le trajet est au moins une pression prédéterminée cohérente avec la température de stérilisation et le débit pour garantir une stérilisation adéquate du liquide aqueux de sortie tout en maintenant le liquide dans l'état liquide,
**caractérisé en ce que** :
- le trajet enfermé (120) dans la chambre de chauffage a une capacité qui contient un volume de liquide au moins égal à un débit souhaité maximum donné pendant un temps nécessaire pour stériliser le liquide à une valeur de SAL prédéterminée ;
- en aval, à proximité du site de sortie du trajet enfermé dans la chambre de chauffage, un clapet de décharge (130) est disposé dans le trajet d'écoulement de sortie pour garantir qu'une pression en amont minimum prédéterminée est maintenue dans le trajet enfermé dans la chambre de chauffage, et une autre deuxième vanne (140) est également disposée en série dans le trajet d'écoulement en aval du clapet de décharge ;
- la deuxième vanne (140) étant commandée de manière sélective par une combinaison « ET » de capteurs de température et de pression de liquide (150, 160), le commutateur de capteur de température (150) étant disposé dans le trajet d'écoulement de fluide dans le trajet enfermé suffisamment à proximité du site d'entrée du trajet enfermé pour garantir qu'une température de stérilisation minimum prédéterminée a été obtenue, garantissant de ce fait le maintien de la température de stérilisation minimum dans le reste du trajet, et le commutateur de capteur de pression (160) étant disposé en aval du trajet enfermé pour détecter une pression en amont de stérilisation prédéterminée, dans lequel les contacts de chacun des commutateurs du capteur de température et du capteur de pression sont connectés en série de sorte que la deuxième vanne est ouverte lorsque le capteur de température détecte au moins une température prédéterminée et que le capteur de pression détecte une pression prédéterminée, et dans lequel le capteur de température (150) comprend un commutateur de détection de température disposé pour détecter la température du liquide dans la chambre de chauffage et pour se fermer à une première température prédéterminée et pour s'ouvrir à une deuxième température prédéterminée, et
le capteur de pression (160) comprend un commutateur de détection de pression disposé pour détecter la pression du liquide dans la chambre de chauffage et pour se fermer à une première pression prédéterminée et pour s'ouvrir à une deuxième pression prédéterminée ; dans lequel chaque commutateur de chaque capteur est ouvert et fermé à différentes valeurs (de température et de pression), créant de ce fait une hystérésis dans chaque paramètre de commutation et, par conséquent, garantissant un fonctionnement stable, dans lequel la deuxième vanne s'ouvre de manière fonctionnelle lorsque ledit commutateur de détection de pression et ledit commutateur de détection de température sont tous deux fermés ; et
- un échangeur de chaleur (40) à travers lequel un liquide d'entrée s'écoule dans le trajet de sortie (50) et à travers lequel le liquide de sortie s'écoule dans le trajet de sortie (60).

2. Appareil de purification de liquide aqueux à écoulement continu selon la revendication 1, comprenant en outre un système de chauffage pour chauffer le liquide s'écoulant à travers l'appareil à une température précise alors qu'il se trouve dans la chambre de chauffage.

3. Appareil de purification de liquide aqueux à écoulement continu selon la revendication 2, comprenant en outre un bain de chauffage comprenant un matériau qui change d'état à la température prédéterminée.

4. Appareil de purification de liquide aqueux à écoulement continu selon la revendication 1, dans lequel ladite source comprend un ensemble de pompe à liquide.

5. Appareil de purification de liquide aqueux à écoulement continu selon la revendication 4, dans lequel ledit ensemble de pompe à liquide comprend une pompe à commande variable.

6. Appareil de purification de liquide aqueux à écoulement continu selon la revendication 1, dans lequel ladite source consiste en un réservoir statique et un orifice de commande d'écoulement associé.

7. Appareil de purification de liquide aqueux à écoulement continu selon la revendication 1, dans lequel ladite chambre comprend une source de chauffage électrique.

8. Appareil de purification de liquide aqueux à écoulement continu selon une ou plusieurs des revendications précédentes, comprenant en outre un échangeur de chaleur.

9. Procédé pour stériliser un liquide aqueux à un niveau d'assurance de stérilité (SAL) prédéterminé comprenant les étapes :
- de fourniture d'une source de liquide aqueux contaminé d'entrée à purifier au SAL prédéterminé ;
- de fourniture d'une chambre de chauffage (70), à travers laquelle le liquide aqueux est dirigé et chauffé à une première température prédéterminée ;
- de fourniture d'un trajet (118) comprenant un trajet d'entrée (50), un trajet de chambre de chauffage interne (120) et un trajet de sortie (60) qui traverse la chambre de chauffage de la source d'entrée à un site de sortie à partir duquel le liquide aqueux au SAL prédéterminé s'écoule ;
- de fourniture d'une première vanne (130) dans le trajet en aval de ladite chambre de chauffage, ladite vanne limitant l'écoulement de sortie jusqu'à ce qu'une première pression prédéterminée soit atteinte dans le trajet ;
- de fourniture d'une deuxième vanne (140) dans le trajet en aval de ladite première vanne, ladite deuxième vanne étant fermée pour limiter l'écoulement de sortie jusqu'à ce qu'une deuxième température prédéterminée, qui est sélectionnée en tant que température de stérilisation adéquate pour le SAL à des débits présélectionnés à partir de la source, soit atteinte par le liquide aqueux au niveau d'un site prédéterminé dans la chambre de chauffage et jusqu'à ce qu'une deuxième pression prédéterminée qui garantit que le liquide aqueux reste dans l'état liquide dans le trajet soit mesurée ;
- de lancement du fonctionnement en fermant la vanne ;
- de lancement du chauffage de la chambre de chauffage à la première température prédéterminée ;
- de lancement de l'écoulement du liquide aqueux à partir de la source ;
- d'ouverture de la première vanne lorsque la première pression prédéterminée est atteinte ;
- d'ouverture de la deuxième vanne lorsque la deuxième température prédéterminée et la deuxième pression prédéterminée sont toutes deux atteintes conjointement, garantissant de ce fait que l'écoulement de sortie est au SAL prédéterminé, dans lequel le capteur de température (150) comprend un commutateur de détection de température disposé pour détecter la température du liquide dans la chambre de chauffage et pour se fermer à une première température prédéterminée et pour s'ouvrir à une deuxième température prédéterminée, et le capteur de pression (160) comprend un commutateur de détection de pression disposé pour détecter la pression du liquide dans la chambre de chauffage et pour se fermer à une première pression prédéterminée et pour s'ouvrir à une deuxième pression prédéterminée ; dans lequel chaque commutateur de chaque capteur est ouvert et fermé à différentes valeurs (de température et de pression), créant de ce fait une hystérésis dans chaque paramètre de commutation et, par conséquent, garantissant un fonctionnement stable ; et
- de fourniture d'un échangeur de chaleur (40) à travers lequel un liquide d'entrée s'écoule dans le trajet de sortie (50) et à travers lequel un liquide de sortie s'écoule dans le trajet de sortie (60).
